(19) Europäisches Patentamt
European Patent Office
Office européen des brevets

(11) **EP 2 780 208 B1**

(12) **EUROPÄISCHE PATENTSCHRIFT**

(45) Veröffentlichungstag und Bekanntmachung des Hinweises auf die Patenterteilung:
**30.12.2015 Patentblatt 2015/53**

(51) Int Cl.:
***B60W 30/06*** (2006.01)

(21) Anmeldenummer: **12772285.8**

(22) Anmeldetag: **04.10.2012**

(86) Internationale Anmeldenummer:
**PCT/EP2012/069575**

(87) Internationale Veröffentlichungsnummer:
**WO 2013/072131 (23.05.2013 Gazette 2013/21)**

(54) **VERFAHREN ZUR BESTIMMUNG DES DYNAMISCHEN ABROLLRADIUS VON REIFEN**

METHOD FOR DETERMINING THE DYNAMIC ROLLING RADIUS OF TYRES

PROCÉDÉ PERMETTANT DE DÉTERMINER LE RAYON DE ROULEMENT DYNAMIQUE D'UN PNEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2011 DE 102011086490**

(43) Veröffentlichungstag der Anmeldung:
**24.09.2014 Patentblatt 2014/39**

(73) Patentinhaber: **Robert Bosch GmbH**
**70442 Stuttgart (DE)**

(72) Erfinder:
• **PAMPUS, Christian**
**71229 Leonberg (DE)**
• **RETTIG, Rasmus**
**22529 Hamburg (DE)**

(56) Entgegenhaltungen:
**DE-A1-102004 007 578    US-A- 5 402 365**

EP 2 780 208 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Die Erfindung bezieht sich auf ein Verfahren zur Bestimmung des dynamischen Abrollradius von Reifen, zur Kopplung mit einem elektronischen Kompassmodul zur Realisierung eines Einpark- und Manövriersystems sowie auf ein dementsprechendes Fahrerassistenzsystem.

DE 10 2004 007 578 A1 bezieht sich auf eine kompassbasierte Einparkhilfe. Diese unterstützt einen Fahrzeugführer beim senkrechten und parallelen Rückwärtseinparken seines Fahrzeugs in Parklücken durch optische und akustische Informationen. Die Einparkhilfe umfasst einen analogen oder einen elektronischen Kompass, von dem der Fahrer die für den Einparkvorgang relevanten Informationen ablesen kann. Richtungsinformationen des Kompasses werden direkt angezeigt und mittels eines Prozessors weiterverarbeitet. Wird die Einparkhilfe zusätzlich mit einem geeigneten Prozessor ausgestattet, so können über entsprechende Eingabeelemente die Basisdaten der verschiedenen Fahrzeugentypen eingegeben und abgespeichert werden und daraus zusammen mit dem jeweiligen Parkvorgang einzugebende Daten, so zum Beispiel der Seitenabstand sowie die Einparkart sowie den Richtungsinformationen des Kompasses alle für den Einparkvorgang relevanten Parametern und Einparkanweisungen ermittelt werden. Während des Einparkens überwacht der mit dem elektronischen Kompass gekoppelte Prozessor die jeweilige Fahrzeugausrichtung. Sobald ein berechneter Wendepunkt erreicht ist, ertönt ein Signalton, der dem Fahrer das entgegengesetzte Einlenken signalisiert. Sobald das Fahrzeug richtig ausgerichtet in der Parklücke steht, ertönt erneut ein Signalton, der das Ende des Parkvorganges signalisiert.

DE 692 32 261 T2 bezieht sich allgemein auf den Bereich der Fahrzeugnavigation und insbesondere auf die Verbesserung der Genauigkeit von sensorischen Informationen. Dazu wird eine Sensorsystem vorgeschlagen, welches fehlerhafte Signale eines Sensors durch Signale eines unabhängigen Sensors korrigiert. So kann beispielsweise eine Korrektur von Richtungswerten aufgrund von Differenzen in den Abrollradien der Reifen erfolgen. Zur Kalibrierung eines Hodometers wird der Richtungswert mit einem Magnetfeldkompass verglichen und die zurückgelegte Entfernung mithilfe von GPS-Daten validiert. Zusätzlich findet die Kalibrierung von Richtungsvariablen in Abhängigkeit von dem jeweiligen Fahrmanöver statt.

DE 10 2009 028 261 A1 bezieht sich auf ein Verfahren und eine Steuerung zur Kalibrierung einer automatisch lenkenden Einparkhilfe. Die Einparkhilfe dient zur aktiven Steuerung eines Einlenkwinkels eines Fahrzeugs. Das Verfahren berücksichtigt insbesondere einen Stellgliedfehler, in dem ein Ist-Bahnverlauf, der sich durch das Steuern gemäß Soll-Bahnverlauf ergibt, mit dem Soll-Bahnverlauf verglichen wird. Aus diesem Vergleich errechnet sich ein Korrekturparameter, der mit dem Fehler durch eine monotone Funktion verknüpft ist. Eine Kombination des Einlenkwinkels mit dem Korrekturparameter, ermöglicht eine Steuerung des Aktors, so dass der Ist-Bahnverlauf und der Soll-Bahnverlauf im Wesentlichen übereinstimmen.

Aus der US 5 402 365 A ist ein Odometer bekannt, das Radumdrehungen zählt und daraus eine zurückgelegte Strecke eines Fahrzeugs berechnet. Zur Verbesserung der Genauigkeit der Wegstreckenmessung wird vorgeschlagen, dass sowohl an einem rechten Rad, als auch an einem linken Rad jeweils induktive Sensoren vorgesehen sind. Es ist ferner ein Kompass vorgesehen, der die Ausrichtung des Fahrzeugs bestimmt. Das Verhältnis der Messwerte beider Sensoren während einer längeren Geradeausfahrt wird als Kalibrierung für Wegstreckenmessung verwendet.

Es sind bereits im Markt befindliche, auf Ultraschall basierende Einpark- und Manövrierfunktionen bekannt, wie beispielsweise das halbautomatische Einparken in Parallelparklücken und Querparklücken. Qualitätskriterien für die Güte des Einparkvorganges in Parallelparklücken ist insbesondere ein Zielabstand zum Bordstein, der sich üblicherweise in einem engen Band zwischen 5 cm und 25 cm für mindestens 95 % aller Einparkmanöver bewegen muss.

Eine Vielzahl von Fehlergrößen tragen zur einer Varianz eben jenes Toleranzbandes zwischen 5 cm und 25 cm Abstand des Rades vom Bordstein bei. Die wichtigste Einflussgröße ist bei weitem der Abrollumfang des montierten Reifens. Ein Fehler von 1 % im parametrierten Abrollumfang führt zu einer systematischen Erhöhung bzw. Erniedrigung des Bordsteinabstandes um etwa 4,5 cm für alle Einparkmanöver. Zu berücksichtigen sind die gemäß Spezifikation zugelassenen Reifen/Felgen-Kombinationen, ferner Fertigungstoleranzen der Reifen, die bis zu 4 % betragen dürfen sowie ein sich einstellender Profilabrieb in der Größenordnung bis 2 %. Durch eine möglichst genaue automatische Bestimmung des Reifenabrollumfanges und die daraus folgende verbesserte Streckenbestimmung kann die Genauigkeit der Einparkfunktion maßgeblich verbessert werden.

Zusätzlich zu einer genauen Streckenbestimmung ist innerhalb der Fahrzeugbewegungsschätzung vor allem eine präzise Erkennung von Winkeländerungen erforderlich, da ein Winkelfehler über die Fahrstrecke stets zu einem sich aufkumulierenden Positionsfehler führt.

Darstellung der Erfindung

Erfindungsgemäß wird vorgeschlagen, ein Einparksystem entweder direkt, beispielsweise durch Verbau im gleichen Steuergerät oder indirekt durch Einlesen einer entsprechenden Winkelinformation mit dem Signal eines elektronischen Kompass zu koppeln und dieses algorithmisch zu verarbeiten. Daraus ergibt sich eine genaue Schätzung des Abrollradius der Reifen sowie eine stabilisierte Bestimmung von Winkeländerungen. Der erfindungsgemäß vorgeschlagenen Lösung folgend kann eine Verbesserung der Einhaltung und der Genauigkeit der Zielposition erreicht werden, was die Anzahl der Korrekturzüge, die andernfalls vom Fahrer durchzuführen wären, vermindert. Des Weiteren kann eine erhebliche Kostenreduktion in Applikationsprojekten erreicht werden. Zur Kalibration der Abrollradien der Reifen werden im Rahmen des erfindungsgemäß vorgeschlagenen Verfahrens folgende Eingangssignale herangezogen:

Die Winkelinformation des Kompasses, $\Phi_{Kompass}$, Wegimpulse $s_{HL}$ des linken Hinterrades (Radimpulse des Drehzahlfühlers), Wegimpulse $s_{HR}$ des rechten Hinterrades (Radimpulse des Drehzahlfühlers), die Spurweite b des Fahrzeugs sowie die Wegstrecke pro Radimpuls $d_{W IC}$. Bezogen auf einen Vollkreis legt ein kurvenaußenliegendes Rad $2\pi \cdot$ b mehr an Wegstrecke zurück, verglichen mit dem kurveninneren Rad. Unter Annahme einer gefahrenen Wegstrecke pro Radimpuls $d_{WIC}$ ergibt sich für ein Kreissegment die Winkeländerung

$$\Delta\varphi_{WIC} = \frac{(s_{HL} - s_{HR})d_{WIC}}{b}$$

Aus dem elektronischen Kompass ergibt sich wiederum eine Winkeländerung $\Delta\varphi_{Kompass}$. Aus dieser Beziehung lässt sich ein Korrekturfaktor

$$k = \frac{\Delta\varphi_{Kompass}}{\Delta\varphi_{WIC}}$$ berechnen für die Wegstrecke $d_{WIC}$.

Es kann eine Auswertung von Kurvenfahrten über eine längeren Zeitraum vorgenommen werden und jeweils ein Korrekturfaktor k ermittelt werden. Die Manöver, anhand deren der Korrekturfaktor k ermittelt wird, sollten auf repräsentative Fahrsituationen eingeschränkt werden. So sollten die Manöver, bei denen der Korrekturfaktor k ermittelt wird, möglichst praxisnah, d.h. möglichst unter den Bedingungen erfolgen, unter denen später Einpark- bzw. kompliziertere Fahrmanöver erfolgen. So sollte die Beschleunigung bzw. die Verzögerung relativ gering sein und es sollten geringe Giergeschwindigkeiten auftreten. Fliehkräfte würden andernfalls den absoluten Abrollumfang eines Reifens beeinflussen. Die mittlere Geschwindigkeit sollte zwischen 20 km/h bis 60 km/h liegen, da bei hohen Geschwindigkeiten der absolute Abrollumfang sich komplexen Änderungen unterzieht und die Temperatur des Gummis ansteigt.

Über einen längeren Zeitraum kann daraus statistisch ein Wert für den Abrollradius errechnet werden, so zum Beispiel durch ein Eintrag in ein Histogramm für k = 0,9 bis 1,1.

Vorteile der Erfindung

In vorteilhafter Weise ermöglicht die erfindungsgemäß vorgeschlagene Lösung die Ermittlung dynamischer Abrollradien, insbesondere im unteren Geschwindigkeitsbereich mit einer für Park- und Rangierfunktionen ausreichenden Genauigkeit. Sie liegt im Bereich von 1 % und darunter. Ferner geht in die Ermittlung dynamischer Abrollradien das Referenzsignal ein, das die Änderung des Fahrzeugwinkels in der Umwelt exakt quantifiziert. Die Genauigkeit hinsichtlich der Ermittlung dynamischer Abrollradien wird des Weiteren dadurch verbessert, dass die Fahrzeugeigenbewegungsschätzung durch eine absolute Winkelreferenz aus dem elektronischen Kompass gestützt wird.

Durch die genannten vorteilhaften Eigenschaften des erfindungsgemäß vorgeschlagenen Verfahrens lässt sich die Einhaltung der Genauigkeit der Zielposition bzw. deren Verbesserung erreichen, da sich eine erhebliche Kostenreduktion in Applikationsprojekten erreichen lässt. Das erfindungsgemäß vorgeschlagene Verfahren ermöglicht des Weiteren die Zielgenauigkeit bei Parkmanövern auch bei Reifenänderungen sicherzustellen. Daraus ergibt sich wiederum eine Verringerung der Kosten für die Absicherung und die Systemoptimierung sowie den Test.

Kurze Beschreibung der Zeichnung

Anhand der Zeichnung wird die Erfindung nachstehend eingehender beschrieben.

Es zeigt:

Figur 1    zeigt die Wege, welche ein kurveninnenliegendes Hinterrad und ein kurvenaußenliegendes Hinterrad eines Fahrzeugs bei Passage einer 90°-Kurve zurücklegen,

Figur 2    den schematischen Aufbau eines Steuergerätes mit elektronischem Kompass und

Figur 3    ein Ablaufdiagramm, anhand dessen die einzelnen und Berechnungsschritte des erfindungsgemäß vorgeschlagenen Verfahrens näher beschrieben werden.

Ausführungsbeispiele

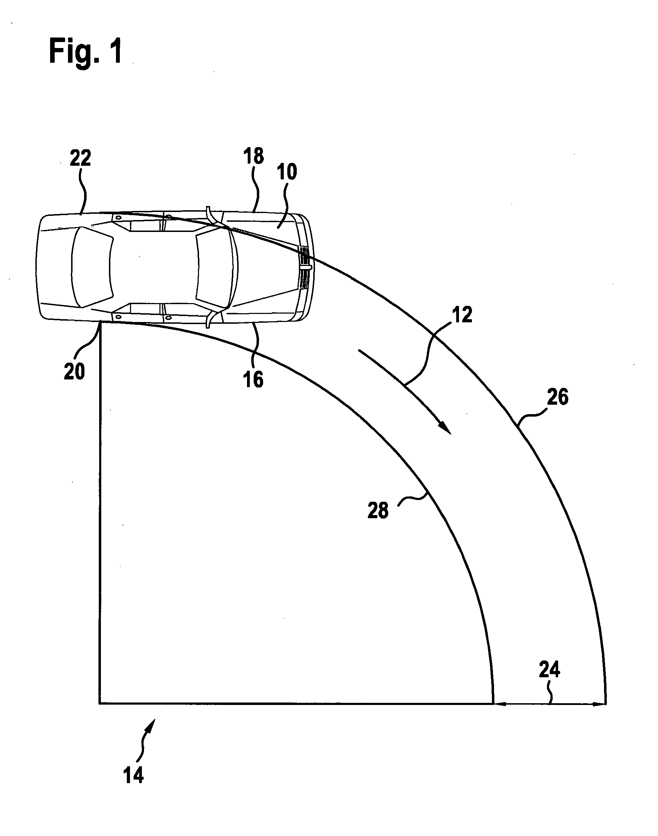

Figur 1 zeigt ein Fahrzeug 10, welches in Fahrtrichtung 12 fahrend eine 90°-Bogen 14 beschreibende Kurve durchfährt. Mit Bezugszeichen 16 ist ein rechtes Vorderrad des Fahrzeugs 10 bezeichnet, während mit Bezugzeichen 18 ein linkes Vorderrad des Fahrzeugs 10 bezeichnet ist.

Ein rechtes Hinterrad 20 stellt in vorliegendem Zusammenhang ein kurveninneres Rad dar, während ein linkes Hinterrad 22 bei der in Figur 1 dargestellten Rechtskurve das kurvenäußere Rad darstellt.

Das Fahrzeug 10 weist, bezogen auf die Fahrzeugbreite und den Abstand der Vorderräder 16, 18 bzw. der Hinterräder 20 bzw. 22 voneinander, eine Spurweite 24 auf. Während das kurveninnere Rad, im vorliegenden Fall das rechte Hinterrad 20 einen kürzeren Weg zurücklegt, gemäß der Beziehung

$$s_{Kurve\_innen} = \frac{\pi \, r_{innen}}{2}$$

liegt das kurvenäußere Rad, im vorläufigen Fall das linke Hinterrad des Fahrzeugs 10, einen längeren Weg zurück gemäß der Beziehung

$$s_{Kurve\_außen} = \frac{\pi}{2}(r_{innen} + b)$$

mit b Spurweite 24 des Fahrzeugs 10, $r_{innen}$.Innenradius der Kurve.

In der Darstellung gemäß Figur 1 ist der Weg, welchen das linke Hinterrad 22 zurücklegt, mit Bezugszeichen 26 bezeichnet, während der Weg, welchen das rechte Hinterrad 20 des Fahrzeugs 10 bei Passage der Kurve gemäß Figur 1 in Fahrtrichtung 12 zurücklegt, mit Bezugszeichen 28 bezeichnet ist. Aus der Darstellung gemäß Figur 1 sowie den oben genannten Beziehungen zur Berechnung der Wege $s_{Kurve\_innen}$ bzw. $s_{Kurveaußen}$ ist der Weg, welchen das außenliegende Rad, im vorliegenden Fall das linke Hinterrad 22 des Fahrzeugs 10 zurücklegt, größer als der Weg 28, den das Kurveninnere, in diesem Falle das rechte Hinterrad 20 des Fahrzeugs 10 zurücklegt.

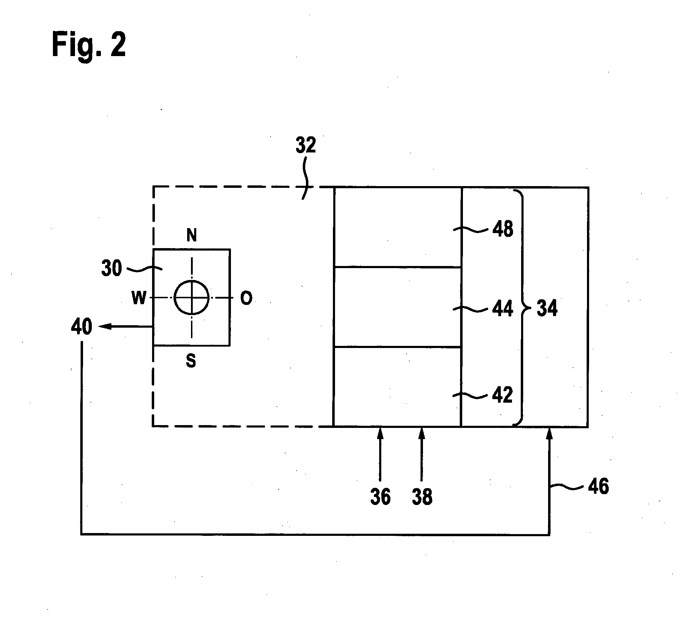

Figur 2 ist in schematischer Weise der Aufbau eines Steuergerätes, dem ein elektronischer Kompass zugeordnet ist, zu entnehmen, an welchem das erfindungsgemäß vorgeschlagene Verfahren implementierbar ist.

Wie Figur 2 zeigt, umfasst ein Steuergerät 32 einen elektronischen Kompass 30. Der elektronische Kompass 30 generiert eine absolute Winkelreferenz zur Stützung der Fahrzeugeigenbewegungsschätzung. Die Winkelinformation $\varphi_{Kompass}$ wird als absolute Winkelreferenz ermittelt und als Eingabe 46 als absolute Winkelreferenz im Steuergerät 32 übermittelt, liegt demzufolge dort als Eingangsgröße zur weiteren Verarbeitung an. In gleicher Weise erhält das Steuergerät 32 als Eingangsgrößen Wegimpulse 36 bzw. 38 der beiden Hinterräder 20 bzw. 22 des Fahrzeuges 10. Die Wegimpulse 36 bzw. 38 werden durch Drehzahlfühler, die den einzelnen Rädern 20 bzw. 22 zugeordnet sind, ermittelt. Die Drehzahlfühler sind den Rädern 16, 18, 20, 22 des Fahrzeugs 10 zur Ermittlung von Signalen, die in einem Antiblockiersystem (ABS) bzw. einem elektronischen Stabilitätsprogramm (ESP) oder im Rahmen einer Antischlupfregelung benötigt werden.

Die Wegstrecken $d_{WIC}$ pro Radimpuls 36 bzw.

38, die als Eingangssignale am Steuergerät 32 anstehen, sind im Auslieferungszustand, d.h. vor der ersten Kalibration durch das hier beschriebene Verfahren auf einen sinnvollen Basiswert parametriert. Dieser kann zum Beispiel aus einem mittleren Abrollradius bestimmt werden, der sich für die für das Fahrzeug zugelassenen Reifentypen ergibt oder aus dem Abrollradius des am häufigsten ausgelieferten Reifentyps. Ist der Abrollradius bekannt, dann ergibt sich die Wegstrecke pro Radimpuls unter Hinzunahme der Zähnezahl eines Drehzahlfühlers, der als Basis der Streckenmessung pro Rad dient. Im weiteren Verlauf werden über das hier beschriebene Verfahren die Wegstrecken pro Radimpuls präzise bestimmt und in einem nicht-flüchtigen Speicher abgelegt. Die pro Radimpuls zurückgelegte Wegstrecke $d_{WIC}$ dient der Ermittlung 44 einer Winkeländerung pro Kreissegment $\Delta \varphi_{WIC}$.

Bei der Berechnung 44 der Winkeländerung pro Kreissegment $\Delta \varphi_{WIC}$ wird die Differenz der Radimpulse 36, 38 für das rechte Hinterrad 20 und das linke Hinterrad 22 gebildet, mit der Wegstrecke pro Radimpuls multipliziert und durch die Spurweite 24 b gemäß der Beziehung

ermittelt: $\Delta \varphi_{WIC} = \dfrac{(s_{HL} - s_{HR})d_{WIC}}{b}$

mit b Spurweite 24, $s_{HL}$ Wegimpuls 36 des linken Hinterrades 22, $s_{HR}$ Wegimpuls 38 des rechten Hinterrades 20, $d_{WIC}$ Wegstrecke pro Radimpuls und b Spurweite 24.

Aus den nunmehr bekannten Informationen, nämlich der absoluten Winkelreferenz $\varphi_{Kompass}$ und aus der im Rahmen der algorithmischen Datenverarbeitung 34 ermittelten Berechnung einer Winkeländerung pro Kreissegment $\Delta \varphi_{WIC}$, wird der Korrekturfaktor k ermittelt. Dieser Korrekturfaktor ist bezogen auf die Wegstrecke $d_{WIC}$, die pro Radimpuls zurückgelegt wird.

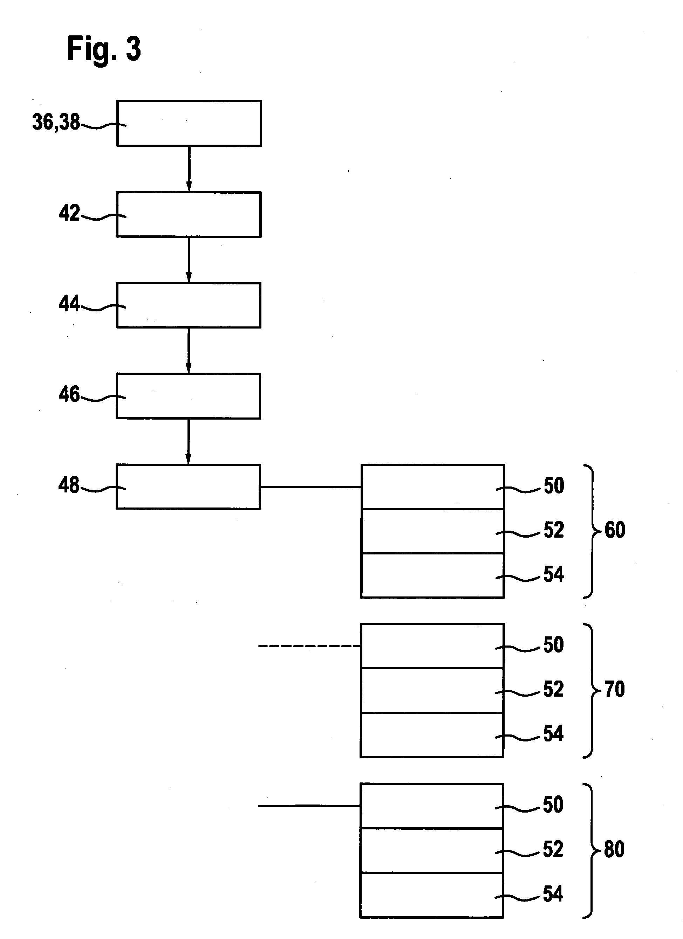

In Figur 3 ist der Ablauf der algorithmischen Verarbeitung innerhalb des Steuergerätes gemäß der schematischen Darstellung in Figur 2 als Flussdiagramm dargestellt.

Ausgehend von den Wegimpulsen 36, 38 für die Hinterräder 20 bzw. 22 sowie der pro Radimpuls zurückgelegten Wegstrecke $d_{WIC}$, erfolgt die Berechnung 44.

Die Eingabe der absoluten Winkelreferenz am Steuergerät 32 ist mit Bezugszeichen 46 angedeutet. Im Rahmen einer Berechnung 48 erfolgt die Ermittlung des Korrekturfaktors k aus einer Quotientenbildung der beiden Winkelsignale. Das Winkelsignal $\Delta \varphi_{Kompass}$, welches die absolute Winkelreferenz darstellt sowie der berechneten Winkeländerung $\Delta \varphi_{WIC}$.

Der Korrekturfaktor k der bei der Berechnung 48 ermittelt wird, bezieht sich auf die Wegstrecke $d_{WIC}$. Es können über einen längeren Zeitraum Kurvenfahrten erfolgen und jeweils zu einem Korrekturfaktor k verrechnet werden. Die bei den Kurvenfahrten erfolgten Manöver sollten auf repräsentative Fahrsituationen 50, 52, 54 wie im Flussdiagramm gemäß Figur 3 angedeutet, beschränkt sein. So sollte bei den repräsentativen Fahrsituationen die Beschleunigung und Verzögerung gering sein. Ferner sollten die repräsentativen Fahrsituationen bei geringen Giergeschwindigkeiten erfolgen, da zu hohe Fliehkräfte den absoluten Abrollumfang an den Rädern 16, 18, 20, 22 des Fahrzeugs 10 beeinflussen. Des Weiteren ist zu den repräsentativen Fahrsituationen zu zählen, dass diese bei mittleren Geschwindigkeiten in einem Bereich zwischen 20 km/h und 60 km/h durchgeführt werden, da zu hohe Geschwindigkeiten den absoluten Abrollumfang der Räder 16, 18, 20, 22 des Fahrzeugs 10 verändern, ferner verändert sich die Temperatur des Gummis der Reifen an den Rädern 16, 18, 20, 22 des Fahrzeugs 10.

Über die Mittelung über einen längeren Zeitraum kann aus diesen Parametern statistisch ein Wert des Abrollradius errechnet werden, so zum Beispiel durch einen Eintrag in ein Histogramm für k im Rahmen einer Histogrammisierung.

Je nach Genauigkeit des verfügbaren Signals kann das Kompasssignal $\varphi_{Kompass}$, vgl. Bezugszeichen 40 direkt zur Ermittlung von Winkeländerung herangezogen werden oder es kann eine Korrektur der Winkelinformation in der Regel aus den ISB-Signalen und dem Lenkradwinkel berechnet, erfolgen. So kann die Genauigkeit der Schätzung der Fahrzeugeigenbewegung unter Verwendung des Kompassmoduls in einem Assistenzsystem noch verbessert werden. Diese Ausführungsmöglichkeit des erfindungsgemäß vorgeschlagenen Verfahrens erfordert keine Berechnung korrekter Abrollradien. Es kann vielmehr bei sehr hoher Genauigkeit der Winkelinformation die Winkelausgabe der Eigenbewegungsschätzung des Assistenzsystems durch die Winkelausgabe des Kompassmoduls ersetzt werden oder es kann eine Verrechnung beider Größen durch einen Kalman-Filter erfolgen.

Durch das vorstehend im Rahmen der Figuren 1 bis 3 beschriebene Verfahren und dessen Rechnungsgrundlagen kann die Zielgenauigkeit eines Einparkvorganges auch bei Reifenänderungen sichergestellt werden. So lässt sich beispielsweise der Korrekturfaktor k für unterschiedliche Reifentypen 60, 70, 80 ermitteln, beispielsweise für Winterreifen oder für Sommerreifen oder auch für Allwetterreifen. Dies soll unter dem ersten Reifentyp 60, dem zweiten Reifentyp 70 und einem dritten Reifentyp 80 verstanden werden. Durch das Vorhandensein der Korrekturfaktoren kann die Zielgenauigkeit des Einparkens bei den erwähnten Reifenwechseln beibehalten werden, so dass in der Folge die Kosten für Absicherung, Systemoptimierung und Tests drastisch verringert werden können, falls das erfindungsgemäß vorgeschlagene Verfahren implementiert wird.

Mit dem erfindungsgemäß vorgeschlagenen Verfahren ist mithin eine genaue Schätzung des Abrollradius' der Reifen der Räder 16, 18, 20 und 22 möglich, des Weiteren kann eine absolute Winkelreferenz zur Genauigkeitsverbesserung berücksichtigt werden.

Die Erfindung ist nicht auf die vorstehend beschriebenen Ausführungsbeispiele und darin hervorgehobenen Aspekte beschränkt. Vielmehr sind innerhalb des durch die anhängigen Ansprüche angegebenen Bereiches eine Vielzahl von Abwandlungen möglich, die Rahmen fachmännischen Handelns liegen.

**Patentansprüche**

1. Verfahren zur Verbesserung der Einparkgenauigkeit von Fahrassistenzsystemen, die einen elektronischen Kompass (30) umfassen, mit nachfolgenden Verfahrensschritten:

   a) Kopplung eines elektronischen Kompasses (30) mit einem Fahrassistenzsystem,
   b) Kalibration von Abrollradien von am Fahrzeug (10) montierten Reifen (20, 22) anhand von Wegimpulsen (36, 38), einer Spurweite (24) und einer pro Radimpuls (36, 38) zurückgelegten Wegstrecke $d_{WIC}$,
   c) Bestimmung einer Winkeländerung $\Delta \varphi_{WIC}$ gemäß Verfahrensschritt b),
   d) Bestimmung einer absoluten Winkeländerung $\Delta \varphi_{Kompass}$ aus dem elektronischen Kompass (30),
   e) Ermittlung eines Korrekturfaktors

   $$k = \frac{\Delta \varphi_{Kompass}}{\Delta \varphi_{WIC}}$$ für die pro Radimpuls zurückgelegte Wegstrecke,
   f) statistische Mittelung mehrerer im Laufe der Fahrbewegung ermittelter Korrekturwerte $k_{1 \ldots n}$, insbesondere durch Histogrammisierung und
   g) Neuberechnung der pro Radimpuls zurückgelegten Wegstrecke $d_{WIC}$ anhand der statistisch verrechneten Korrekturwerte k.

2. Verfahren gemäß Anspruch 1, **dadurch gekennzeichnet, dass** die Winkeländerung $\Delta \varphi WIC$ gemäß der Beziehung

   $$\Delta \varphi_{WIC} = \frac{(s_{HL} - s_{HR}) d_{WIC}}{b},$$

   mit

   $s_{HL}$ Wegimpuls äußeres Hinterrad,
   $s_{HR}$ Wegimpuls inneres Hinterrad,
   $d_{WIC}$ pro Radimpuls gefahrene Strecke,
   b Spurweite des Fahrzeugs

   bestimmt wird.

**3.** Verfahren gemäß Anspruch 1, **dadurch gekennzeichnet, dass** der Korrekturfaktor k für die zurückgelegte Wegstrecke $d_{WIC}$ durch Kurvenfahrten über einen längeren Zeitraum anhand repräsentativer Fahrsituationen (50, 52, 54) bestimmt wird, wobei sich dieser Zeitraum aus einer ausreichenden Stabilisierung des Histogramms ergibt und alternativ bei einer nicht-Stabilisierung des Histogramms während einer typischen minimalen Fahrdauer $\leq 15$ min, das Histogramm ebenfalls in einem nicht-flüchtigen Speicher abgelegt wird zur Vervollständigung während eines anschließenden Fahrzyklus'.

**4.** Verfahren gemäß dem vorhergehenden Anspruch, **dadurch gekennzeichnet, dass** die repräsentativen Fahrsituationen (50, 52, 54) bei geringer Beschleunigung oder Verzögerung < +/- 0,5 m/s$^2$ des Fahrzeugs (10) durchgeführt werden.

**5.** Verfahren gemäß einem der vorhergehenden Ansprüche, **dadurch gekennzeichnet, dass** die repräsentativen Fahrsituationen (50, 52, 54) bei geringen Giergeschwindigkeiten < +/- 25°/s durchgeführt werden.

**6.** Verfahren gemäß einem der vorhergehenden Ansprüche, **dadurch gekennzeichnet, dass** die repräsentativen Fahrsituationen (50, 52, 54) im Geschwindigkeitsbereich zwischen 20 km/h bis 60 km/h durchgeführt werden.

**7.** Verfahren gemäß einem der vorhergehenden Ansprüche, **dadurch gekennzeichnet, dass** aus den repräsentativen Fahrsituationen (50, 52, 54) durch Mittelung über einen längeren Zeitraum statistisch ein Wert für den Abrollradius der am Fahrzeug (10) montierten Räder (16, 18, 20, 22) ermittelt wird.

**8.** Verfahren gemäß einem der vorhergehenden Ansprüche, **dadurch gekennzeichnet, dass** der Korrekturfaktor k über einen längeren Zeitraum für voneinander verschiedene erste, zweite und dritte Reifentypen (60, 70, 80) ermittelt wird.

**9.** Computerprogramm zur Durchführung des Verfahrens nach einem der vorhergehenden Ansprüche, wenn das Computerprogramm auf einer programmierbaren Computereinrichtung ausgeführt wird.

**10.** Fahrassistenzsystem zur Verbesserung der Einparkgenauigkeit mit einem elektronischen Kompass (30) und nachfolgenden Komponenten:

- einem mit einem Einparksystem mit einem Steuergerät (32) gekoppelten elektronischen Kompass (30),
- einem Steuergerät (32) zur Kalibration von Abrollradien von Rädern (16, 18, 20, 22) des Fahrzeugs (10) anhand von Wegimpulsen (36, 38), einer Spurweite (24) und einer pro Radimpuls zurückgelegten Wegstrecke $d_{WIC}$,
- einer Komponente (44) zur Bestimmung einer Winkeländerung pro Kreissegment,
- einer Komponente (30) zur Bestimmung einer Winkeländerung $\Delta \varphi_{Kompass}$ aus dem elektronischen Kompass (30),
- Komponente (48) zur Ermittlung eines Korrekturfaktors k für die pro Radimpuls zurückgelegte Wegstrecke $d_{WIC}$ und
- eine Komponente zur Neuberechnung der pro Radimpuls zurückgelegten Wegstrecke $d_{WIC}$ anhand statistisch verrechneter Korrekturwerte k.

## Claims

**1.** Method for improving the parking accuracy of driving assistance systems which include an electronic compass (30), having the following method steps:

a) coupling an electronic compass (30) with a driving assistance system,
b) calibrating rolling radii of tyres (20, 22) mounted on the vehicle (10) with the aid of distance pulses (36, 38), a track width (24) and a distance $d_{WIC}$ covered per wheel pulse (36, 38),
c) determining an angle change $\Delta \varphi_{WIC}$ in accordance with method step b),
d) determining an absolute angle change $\Delta \varphi_{compass}$ from the electronic compass (30),
e) determining a correction factor

$$k = \frac{\Delta\varphi_{compass}}{\Delta\varphi_{WIC}}$$ for the distance covered per wheel pulse,
f) statistically averaging a plurality of correction values $k_{1...n}$ determined during the travel movement, in particular by histogramming, and
g) recalculating the distance $d_{WIC}$ covered per wheel pulse with the aid of the statistically computed correction values k.

**2.** Method according to Claim 1, **characterized in that** the angle change $\Delta \varphi_{WIC}$ is determined in accordance with the relationship

$$\Delta \varphi_{WIC} = \frac{(s_{HL} - s_{HR})\, d_{WIC}}{b},$$

where

$s_{HL}$ distance pulse outside rear wheel,

$s_{HR}$ distance pulse inside rear wheel,
$d_{WIC}$ distance travelled per wheel pulse,
b track width of the vehicle.

3. Method according to Claim 1, **characterized in that** the correction factor k for the distance $d_{WIC}$ covered is determined by cornering over a relatively long period by means of representative driving situations (50, 52, 54), said period resulting from adequate stabilization of the histogram and, alternatively, given non-stabilization of the histogram during a typical minimum driving time ≤ 15 min, the histogram is likewise stored in a non-volatile memory for completion during a subsequent drive cycle.

4. Method according to the preceding claim, **characterized in that** the representative driving situations (50, 52, 54) are carried out in the case of slight acceleration or deceleration < +/-0.5 m/s² of the vehicle (10).

5. Method according to one of the preceding claims, **characterized in that** the representative driving situations (50, 52, 54) are carried out in the case of low yaw rates < +/- 25°/s.

6. Method according to one of the preceding claims, **characterized in that** the representative driving situations (50, 52, 54) are carried out in the speed range between 20 km/h and 60 km/h.

7. Method according to one of the preceding claims, **characterized in that** a value for the rolling radius of the wheels (16, 18, 20, 22) mounted on the vehicle (10) is determined statistically from the representative driving situations (50, 52, 54) by averaging over a relatively long period.

8. Method according to one of the preceding claims, **characterized in that** the correction factor k is determined over a relatively long period for mutually different first, second and third tyre types (60, 70, 80).

9. Computer program for carrying out the method according to one of the preceding claims when the computer program is executed on a programmable computer device.

10. Driving assistance system for improving the parking accuracy having an electronic compass (30) and components as follows:

- an electronic compass (30) coupled with a parking system having a control unit (32),
- a control unit (32) for calibrating rolling radii of wheels (16, 18, 20, 22) of the vehicle (10) with the aid of distance pulses (36, 38), a track width (24) and a distance $d_{WIC}$ covered per wheel pulse,
- a component (44) for determining an angle change per circle segment,
- a component (30) for determining an angle change $\Delta\varphi_{compass}$ from the electronic compass (30),
- component (48) for determining a correction factor k for the distance $d_{WIC}$ covered per wheel pulse, and
- a component for recalculating the distance $d_{WIC}$ covered per wheel pulse with the aid of statistically computed correction values k.

**Revendications**

1. Procédé d'amélioration de la précision de stationnement de systèmes d'aide à la conduite comprenant une boussole électronique (30), avec les étapes de procédé suivantes :

a) couplage d'une boussole électronique (30) avec un système d'aide à la conduite ;
b) étalonnage de rayons de roulement à partir de pneumatiques (20, 22) montés sur le véhicule (10), à l'aide d'impulsions de trajet (36, 38), d'une distance de trajectoire (24) et d'un tronçon de trajet $d_{WIC}$ parcouru par impulsion de roue (36, 38) ;
c) détermination d'une variation angulaire $\Delta\varphi_{WIC}$ selon l'étape de procédé b) ;
d) détermination d'une variation angulaire absolue $\Delta\varphi_{Kompass}$ à partir de la boussole électronique (30) ;
e) calcul d'un facteur de correction $\dfrac{\Delta\varphi Kompass}{\Delta\varphi WIC}$ pour le tronçon de trajet parcouru par impulsion de roue ;
f) moyenne statistique de plusieurs valeurs de correction $k_{1....n}$ calculées au cours du mouvement de conduite, notamment par histogrammisation ; et
g) nouveau calcul du tronçon de trajet $d_{WIC}$ parcouru par impulsion de roue à l'aide des valeurs de correction k calculées statistiquement.

2. Procédé selon la revendication 1, **caractérisé en ce que** la variation angulaire $\Delta\varphi_{WIC}$ selon la relation :

$$\Delta\varphi_{WIC} = \frac{(S_{HL}-S_{HR})d_{WIC}}{b}$$

est déterminé, avec

$S_{HL}$ impulsion de trajet de roue arrière extérieure ;

$S_{HR}$ impulsion de trajet sur la roue arrière intérieure ;

$d_{WIC}$ tronçon parcouru par impulsion de roue ;

b distance de trajectoire du véhicule.

**3.** Procédé selon la revendication 1, **caractérisé en ce que** le facteur de correction k pour le tronçon de trajet $d_{WIC}$ parcouru par conduite en virage sur une durée plus longue est déterminé à l'aide de situations de conduite (50, 52, 54), cette durée s'obtient à partir d'une stabilisation suffisante de l'histogramme et en variante en cas de non-stabilisation de l'histogramme pendant une durée de conduite $\leq$ 15 min minimale typique, l'histogramme est également mémorisé dans une mémoire non volatile pour compléter pendant le cycle de conduite suivant.

**4.** Procédé selon la revendication précédente, **caractérisé en ce que** les situations de conduite (50, 52, 54) représentatives sont réalisées en cas d'accélération ou de ralentissement réduits < +/- 0,5 m/s$^2$ du véhicule (10).

**5.** Procédé selon l'une quelconque des revendications précédentes, **caractérisé en ce que** les situations de conduite (50, 52, 54) représentatives sont réalisées en cas de vitesses d'embardée < +/-25°/s réduites.

**6.** Procédé selon l'une quelconque des revendications précédentes, **caractérisé en ce que** les situations de conduite (50, 52, 54) représentatives sont réalisées dans la plage de vitesse entre 20 km/h à 60 km/h.

**7.** Procédé selon l'une quelconque des revendications précédentes, **caractérisé en ce que** à partir des situations de conduite (50, 52, 54) représentatives par réalisation de moyenne sur une durée plus longue, une valeur est calculée statistiquement pour le rayon de roulement au niveau des roues (16, 18, 20, 22) montées du véhicule (10).

**8.** Procédé selon l'une quelconque des revendications précédentes, **caractérisé en ce que** le facteur de correction k est calculé sur une plus longue durée pour des premier, deuxième et troisième types de pneumatique (60, 70, 80) différents les uns des autres.

**9.** Programme informatique de mise en oeuvre du procédé selon l'une quelconque des revendications précédentes, lorsque le programme informatique est réalisé sur un dispositif d'ordinateur programmable.

**10.** Système d'aide à la conduite d'amélioration de la précision de stationnement avec une boussole électronique (30) et les composants suivants :

- une boussole électronique (30) couplée à un système de stationnement avec un appareil de commande (32) ;
- un appareil de commande (32) pour étalonner des rayons de roulement de roues (16, 18, 20, 22) du véhicule (10) à l'aide d'impulsions de trajet (36, 38), d'une distance de trajectoire (24) et d'un tronçon de trajet $d_{WIC}$ parcouru par impulsion de roue ;
- un composant (44) pour déterminer une variation angulaire par segment circulaire ;
- un composant (30) pour déterminer une variation angulaire $\Delta \varphi_{Kompass}$ à partir de la boussole électronique (30) ;
- un composant (48) pour calculer un facteur de correction k pour le tronçon de trajet $d_{WIC}$ parcouru par impulsion de roue ;
- un composant pour le calcul à nouveau du tronçon de trajet $d_{WIC}$ parcouru par impulsion de roue à l'aide de valeurs de correction k calculées statistiquement.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004007578 A1
- DE 69232261 T2
- DE 102009028261 A1
- US 5402365 A